Europäisches Patentamt

European Patent Office

Office européen des brevets

(11) Publication number: **0 089 267**
**A2**

# EUROPEAN PATENT APPLICATION

(21) Application number: 83400448.3

(22) Date of filing: 04.03.83

(51) Int. Cl.³: **F 16 D 65/22**

(30) Priority: 12.03.82 US 357521

(43) Date of publication of application:
21.09.83 Bulletin 83/38

(84) Designated Contracting States:
DE FR GB IT

(71) Applicant: **THE BENDIX CORPORATION**
**Executive Offices Bendix Center**
**Southfield Michigan 48037(US)**

(72) Inventor: **Foertsch, Eugene Oscar**
**1905 Brown School Road**
**St. Joseph Michigan 49085(US)**

(74) Representative: **Brullé, Jean et al,**
**Service Brevets Bendix 44, rue François 1er**
**F-75008 Paris(FR)**

(54) A wheel cylinder for a drum brake.

(57) A wheel cylinder (22) for a drum brake includes at least one piston assembly (32) formed by a pair of stamped members (40, 50). The pair of stamped members (40, 50) are assembled in a press-fit relation with a cavity (58) so that the volume of material required for the one piston assembly is minimal in order to reduce weight therefor.

Croydon Printing Company Ltd.

## A WHEEL CYLINDER FOR A DRUM BRAKE

This invention relates to a wheel cylinder for a drum brake.

A wheel cylinder for a drum brake wherein at least one piston assembly is movable in response to fluid pressure within the wheel cylinder to actuate at least one brake shoe.

Prior art wheel cylinders include a pair of pistons which are made from machine steel, sintered iron or aluminum. With each of these known pistons, there is a manufacturing cost associated with production for the pistons, a material cost associated with the volume of material needed to produce the pistons, and a weight penalty associated with the type of piston used. Clearly, it is desireable to reduce cost and weight to provide an economical wheel cylinder piston made with less material and with less weight.

To this end the present invention provides a drum brake wheel cylinder which is characterized by said one piston assembly comprising a pair of members with one end cooperating with sealing means to substantially prevent leakage of fluid pressure, an opposite end opposing said one brake shoe to impart movement thereto, and said pair of members defining a cavity substantially between said ends to provide a weight saving characteristic for said piston assembly.

The design of the present invention permits consideration of different processes such as stamping, die casting, sintering, molding, extruding and screw machining to manufacture the pair of members. Also, different materials can be tested to determine which material best serves the physical and functional requirements for the drum brake wheel cylinder. Examples of such materials are steel, aluminum, brass, stainless steel, plastic phenolics or combinations of materials.

It is an advantage of the present invention that a reliable and simple stamping operation can be implemented to produce wheel cylinder pistons. Also, the stamped piston will use less material to provide a weight savings.

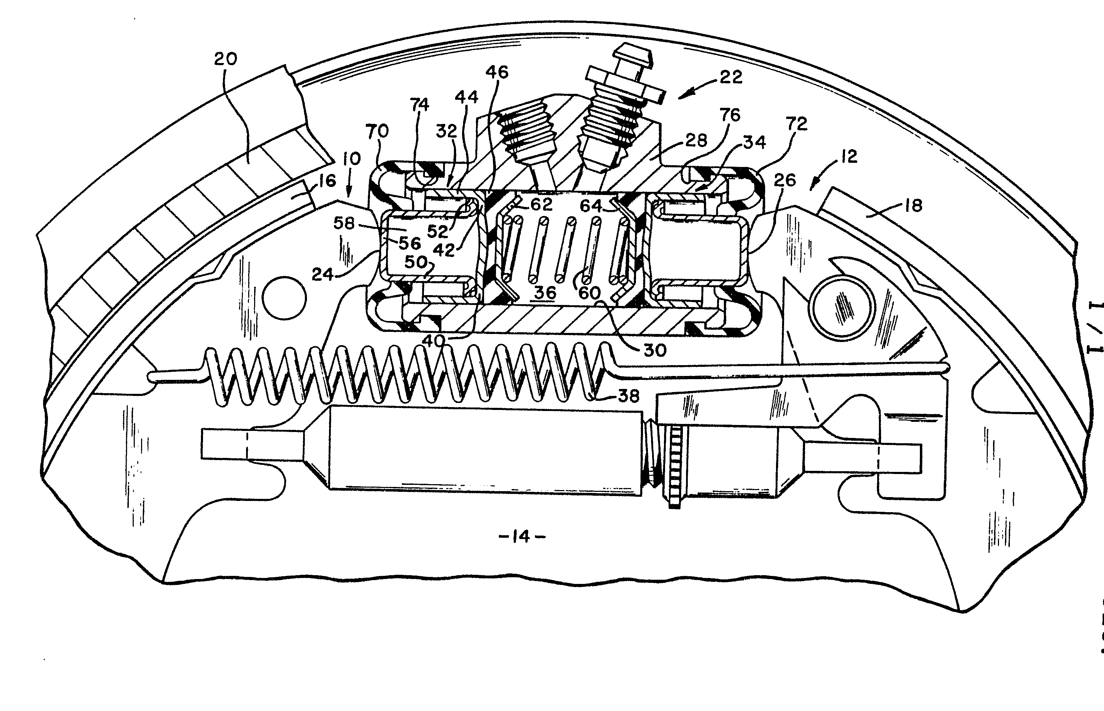

One way of carrying out the invention is illustrated in the attached drawing showing a portion of a drum brake assembly with a wheel cylinder constructed in accordance with the present invention shown in cross section.

A drum brake assembly includes a pair of brake shoes 10 and 12 movably supported on a backing plate 14. The pair of brake shoes include friction linings 16 and 18 which are engageable with a drum 20 during braking. In order to move the pair of brake shoes into engagement with the drum 20, a wheel cylinder 22 is mounted on the backing plate 14 between adjacent ends 24 and 26 of the pair of brake shoes. The wheel cylinder 22 defines a housing 28 with a bore 30 receiving a pair of piston assemblies 32 and 34 in order to form a pressure chamber 36. When fluid pressure is communicated to the pressure chamber 36 via an inlet port the piston assemblies 32 and 34 are movable outwardly to move the pair of brake shoes into braking engagement with the drum 20. A retraction spring 38 is operably connected with the pair of brake shoes to separate the latter from the drum upon termination of braking.

In accordance with the invention each of the pair of piston assemblies 32 and 34 comprises a pair of members. Since both piston assemblies are identical, the description will proceed with reference to only piston assembly 32; however, the features for piston assembly 32 are equally applicable for piston assembly 34. The piston assembly 32 includes a first stamped member 40 which is U-shaped in cross section with a bottom face 42 extending normal to the axis of bore 30 and an integral side cylindrical wall 44 slidably engaging the wall of bore 30. The bottom face engages a resilient sealing disc 46 sealingly engaging the wall of bore 30 so that fluid pressure within pressure chamber 36 acts against the sealing disc to impart movement to the sealing disc and piston assembly 32. The piston assembly 32 also includes a second stamped member 50 which is substantially U-shaped in cross section with an open end defining an edge 52 flared radially outwardly and slightly axially reversed. The flared edge 52 defines an interference fit with the side cylindrical wall 44 so that when the part 50 is pressed into the open end of part 40, the parts remain fixed together as a unit. Also, the part 50 is pressed into the open end of part 40 until the flared edge 52 abuts the bottom face 42 in order to center the part 50 within the bore 30. The part 50 defines an axially extending cylindrical side wall 54 spaced from the side wall 44 and extending to the open end of bore 30 to form a top face 56 engaging the end 24 of brake shoe 10. When the

0089267

parts 40 and 50 are pressed together, a cavity 58 is formed between top face 56 and bottom face 42 thereby eliminating material to provide a lightweight piston assembly. Also, the parts 40 and 50 are formed with thin walls to reduce the amount of material used for the piston assembly.

A spring 60 extends between spring seats 62 and 64 to maintain the piston assemblies at a rest position in engagement with the respective brake shoes when braking is terminated.

In order to prevent contaminants from entering the bore 30, a pair of boots 70 and 72 extend from a pair of recesses 74 and 76 on the housing 28 to sealingly engage the side wall 54 and the side wall for piston assembly 34, respectively.

CLAIMS

1. A wheel cylinder for a drum brake wherein at least one piston assembly (32) is movable in response to fluid pressure within the wheel cylinder to actuate at least one brake shoe (10) characterized by said one piston assembly comprising a pair of members (40, 50) with one end (42) cooperating with sealing means (46) to substantially prevent leakage of fluid pressure, an opposite end (56) opposing said one brake shoe to impart movement thereto, and said pair of members (40, 50) defining a cavity (58) substantially between said ends to provide a weight saving characteristic for said stamped unit.

2. The wheel cylinder of claim 1 in which said pair of members (40, 50) comprises a pair of stamped members, one (50) of said stamped members being engageable with said one brake shoe (10) and the other (40) of said stamped members extending substantially normal to the direction of movement for said one piston assembly.

3. The wheel cylinder of claim 2 in which both of said pair of stamped members (40, 50) are substantially U-shaped in cross-section.

4. The wheel cylinder of claim 2 in which said other stamped member forms an opening to receive said one stamped member, and said one stamped member is press-fitted into the opening to connect said pair of stamped members.

5. The wheel cylinder of claim 4 in which said one stamped member forms a flared edge (52) which is press-fitted into engagement with said other stamped member.

6. The wheel cylinder of claim 2 in which a housing forms a bore for receiving said pair of stamped members and said one stamped member (50) is maintained in spaced relation to said housing bore by said other stamped member.

7. The wheel cylinder of claim 2 in which said one stamped member defines a flared end (52) press-fitted into engagement with said other stamped member, said other member including an axially extending side wall (44) in press-fit relation with said flared end (52), said other stamped member defining a bottom face (42) extending substantially normal to the direction of movement for said one piston assembly, and said flared end is engaged with said bottom face when in press-fit relation with said side wall in order to orientate said one stamped member in the direction of movement for said one piston assembly.

**0089267**

8. The wheel cylinder of claim 1 in which both of said pair of members include thin walls to substantially reduce material for said one piston assembly.

9. A wheel cylinder for a drum brake wherein fluid pressure communicated to the wheel cylinder imparts movement to a pair of piston assemblies in order to move a pair of brake shoes into engagement with the drum, characterized by each of said pair of piston assemblies comprising a first stamped member engageable with a respective brake shoe and a second stamped member cooperating with sealing means to substantially prevent fluid pressure leakage, and said first and second stamped members are press-fitted together to form a lightweight stamping unit as a part of the axle.